(19) Europäisches Patentamt / European Patent Office / Office européen des brevets

(11) **EP 4 468 790 A1**

(12) **EUROPEAN PATENT APPLICATION**
published in accordance with Art. 153(4) EPC

(43) Date of publication:
**27.11.2024 Bulletin 2024/48**

(51) International Patent Classification (IPC):
***H04W 52/02*** (2009.01)

(21) Application number: **23742825.5**

(52) Cooperative Patent Classification (CPC):
**H04W 52/02;** Y02D 30/70

(22) Date of filing: **13.01.2023**

(86) International application number:
**PCT/CN2023/072161**

(87) International publication number:
**WO 2023/138510 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.01.2022 CN 202210062491**

(71) Applicant: VIVO MOBILE COMMUNICATION CO., LTD.
**Dongguan, Guangdong 523863 (CN)**

(72) Inventors:
• LI, Jianhui
  **Dongguan, Guangdong 523863 (CN)**
• LI, Gen
  **Dongguan, Guangdong 523863 (CN)**
• PAN, Xueming
  **Dongguan, Guangdong 523863 (CN)**
• YANG, Xiaodong
  **Dongguan, Guangdong 523863 (CN)**

(74) Representative: Lavoix
**Bayerstraße 83**
**80335 München (DE)**

(54) **CONFIGURATION DETERMINATION METHOD AND APPARATUS, TERMINAL AND NETWORK SIDE DEVICE**

(57) This application discloses a configuration determining method and apparatus, a terminal, and a network side device, and belongs to the field of communication technology. The configuration determining method according to embodiments of this application includes: A terminal receives a first configuration from a first network side device; and the terminal obtains a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration.

FIG. 2

**Description**

**CROSS-REFERENCE TO RELATED APPLICATIONS**

This application claims priority to Chinese Patent Application No.202210062491.7 filed in China on January 19, 2022, which is incorporated herein by reference in its entirety.

**TECHNICAL FIELD**

This application relates to the field of communication technologies, and in specifically, to a configuration determining method and apparatus, a terminal, and a network side device.

**BACKGROUND**

In a communication system, a network side device usually needs to open uplink and downlink channels to maintain a normal operating status, for example, needs to transmit a synchronization signal and PBCH block (Synchronization Signal and PBCH block, SSB) and/or a system information block 1 (System Information Block 1, SIB 1) for downlink and needs to listen to a random access request from a terminal for uplink. As a result, energy consumption at the network side device is high.

**SUMMARY**

Embodiments of this application provide a configuration determining method and apparatus, a terminal, and a network side device, to resolve a problem of high energy consumption of the network side device.

According to a first aspect, a configuration determining method is provided, including:

A terminal receives a first configuration from a first network side device; and

the terminal obtains a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

According to a second aspect, a configuration determining method is provided, including:

A first network side device sends a first configuration to a terminal, where the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

According to a third aspect, a configuration determining apparatus is provided, including:

a first receiving module, configured to receive a first configuration from a first network side device; and

a determining module, configured to obtain a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

According to a fourth aspect, a configuration determining apparatus is provided, including:

a first sending module, configured to send a first configuration to a terminal, where the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

According to a fifth aspect, a terminal is provided. The terminal includes a memory and a processor. The memory stores programs or instructions that are capable of being run on the processor, and when the programs or instructions are executed by the processor, the steps of the method according to the first aspect are implemented.

According to a sixth aspect, a terminal is provided. The terminal includes a processor and a communication interface. The communication interface is configured to receive a first configuration from a first network side device. The processor is configured to obtain a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration.

According to a seventh aspect, a network side device is provided. The network side device includes a memory and a processor. The memory stores programs or instructions that are capable of being run on the processor, and when the programs or instructions are executed by the processor, the steps of the method according to the second aspect are implemented.

According to an eighth aspect, a network side device is provided, including a processor and a communication interface. The communication interface is configured to send a first configuration to a terminal, where the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration.

According to a ninth aspect, a configuration determining system of a wake up signal is provided, including: a terminal and a network side device. The terminal may be configured to perform the steps of the configuration determining method according to the first aspect, and the network side device may be configured to perform the steps of the configuration determining method according to the second aspect.

According to a tenth aspect, a readable storage medium is provided. The readable storage medium stores programs or instructions, and when the programs or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor, and the processor is configured to run a program or instructions, to implement the steps of the method according to the first aspect, or implement the steps of the method according to the second aspect.

According to a twelfth aspect, a computer program/program product is provided. The computer program/program product is stored in a storage medium. The computer program/program product is executed by at least one processor, to implement the steps of the method according to the first aspect, or implement the steps of the method according to the second aspect.

According to a thirteenth aspect, a communication device is provided, and is configured to perform the steps of the method according to the first aspect, or perform the steps of the method according to the second aspect.

In embodiments of this application, the terminal receives the first configuration from the first network side device. The terminal obtains a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration. In this way, because embodiments of this application make clear a manner for determining the signal configuration for sending the first signal by the terminal, the network side device can apply an energy-saving mode, so that energy consumption of the network side device can be reduced.

## BRIEF DESCRIPTION OF THE DRAWINGS

FIG. 1 is a diagram of a structure of a network system applicable to an embodiment of this application;
FIG. 2 is a schematic flowchart of a configuration determining method according to an embodiment of this application;
FIG. 3 is a diagram of sending a wake up signal in a configuration determining method according to an embodiment of this application;
FIG. 4 is a schematic flowchart of obtaining a configuration of a wake up signal in a configuration determining method according to an embodiment of this application;
FIG. 5 is a diagram 1 of transmission of a wake up signal in a configuration determining method according to an embodiment of this application;
FIG. 6 is a diagram 2 of transmission of a wake up signal in a configuration determining method according to an embodiment of this application;
FIG. 7 is a schematic flowchart of another configuration determining method according to an embodiment of this application;
FIG. 8 is a diagram of a structure of a configuration determining apparatus according to an embodiment of this application;
FIG. 9 is a diagram of a structure of another configuration determining apparatus according to an embodiment of this application;
FIG. 10 is a diagram of a structure of a communication device according to an embodiment of this application;
FIG. 11 is a diagram of a structure of a terminal according to an embodiment of this application; and
FIG. 12 is a diagram of a structure of a network side device according to an embodiment of this application.

## DETAILED DESCRIPTION

The following describes the technical solutions in embodiments of this application with reference to the accompanying drawings in embodiments of this application. It is clear that the described embodiments are a part rather than all of embodiments of this application. All other embodiments obtained by persons of ordinary skill in the art based on embodiments of this application shall fall within the protection scope of this application.

In the specification and claims of this application, the terms "first", "second", and the like are intended to distinguish between similar objects but do not necessarily indicate a specific order or sequence. It may be understood that the terms used in this way are interchangeable in an appropriate case, so that embodiments of this application may be implemented in a sequence other than those illustrated or described herein, and that the objects distinguished by "first" and "second" are usually of one type and a quantity of objects is not limited, for example, there may be one first object or a plurality of first objects. In addition, "and/or" used in this specification and the claims indicates at least one of connected objects. The character "/" generally indicates an "or" relationship between associated objects.

It is worth noting that, in addition to a long term evolution (Long Term Evolution, LTE)/LTE-advanced (LTE-Advanced, LTE-A) system, the technologies described in embodiments of this application may further be used in various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in embodiments of this application are usually used interchangeably. The described technologies can be used in the systems and radio technologies mentioned above, and can also be used in other systems and radio technologies. The following describes a new radio (New Radio, NR) system for example purposes and uses NR terms in most of the following descriptions, but these technologies may also be used in applications other than NR system applications, such as a 6th generation (6th Generation, 6G) communication system.

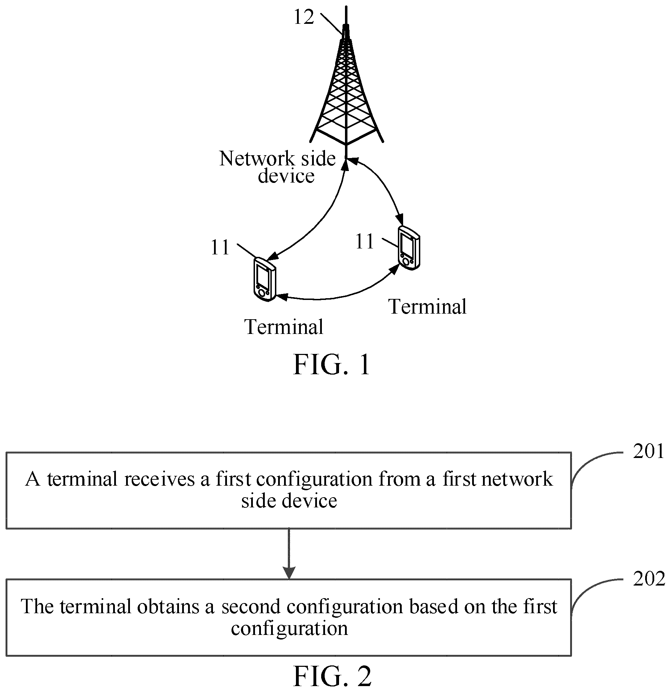

FIG. 1 is a block diagram of a wireless communication system applicable to an embodiment of this application. The wireless communication system includes a terminal 11 and a network side device 12. The terminal 11 may be a terminal side device, for example, a mobile phone, a tablet personal computer (Tablet Personal Computer), a laptop computer (Laptop Computer) or also referred to as a notebook computer, a personal digital assistant (Personal Digital Assistant, PDA), a handheld computer, a netbook, an ultra-mobile personal computer (Ultra-Mobile Personal Computer, UMPC), a mobile internet device (Mobile Internet Device, MID), an augmented reality (Augmented Reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, for example, a refrigerator, a television, a washing machine, or a furniture), a game console, a personal computer (Personal Computer, PC), a teller machine, or a self-service machine. The wearable device includes: a smartwatch, a smartband, a smart headset, smart glasses, smart jewelry (a smart wristlet, a smart bracelet, a smart ring, a smart necklace, a smart anklet, and the like), a smart wristband, smart clothing, and the like. It should be noted that a specific type of the terminal 11 is not limited in embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or another suitable term in the art. The base station is not limited to a specific technical term as long as the same technical effect is achieved It should be noted that, in embodiments of this application, only a base station in an NR system is used as an example, but a specific type of the base station is not limited.

For ease of understanding, some content in embodiments of this application is simply described in the following.

1. Downlink (Downlink, DL) wake up signal (Wake Up Signal, WUS)

In a communication system, to further improve power saving performance of a terminal, a WUS based on a physical downlink control channel (Physical Downlink Control Channel, PDCCH) is introduced. The role of the WUS is to notify UE whether there is a need to listen to the PDCCH during preset onDuration (onDuration) of discontinuous reception (Discontinuous Reception, DRX). When there is no data, the UE may not need to listen to the PDCCH during the onDuration, which is equivalent to that the UE may be in a sleep state in an entire DRX long cycle (Long cycle). This further saves power.

The WUS signal is a type of downlink control information (Downlink Control Information, DCI), which is referred to as DCI with cyclic redundancy check (Cyclic redundancy check, CRC) scrambled by a power saving (Power Saving, PS) radio network temporary identifier (Radio Network Temporary Identifier, RNTI) (DCI with CRC scrambled by PS-RNTI, DCP) for short. The PS-RNTI is an RNTI allocated to the terminal by the network side device specifically for a power saving characteristic, and DCI scrambled by the RNTI carries a wake up or sleep indication of the network side device for the terminal. The terminal determines, based on the indication, whether to start an onDuration timer in a next DRX cycle and whether to perform PDCCH listening.

2. SSB

In LTE, the terminal implements synchronization by using a primary synchronization signal (Primary Synchronization Signal, PSS) and a secondary synchronization signal (Secondary Synchronization Signal, SSS) broadcast and sent by the base station. The concept of the SSB appears in NR, and the SSB consists of a PSS, an SSS, a physical broadcast channel (Physical Broadcast Channel, PBCH), and a demodulation reference signal (Demodulation Reference Signal, DMRS) received within four continuous orthogonal frequency division multiplex (Orthogonal frequency division multiplex, OFDM) symbols, and is mainly for downlink synchronization.

A cycle of the SSB may be 5, 10, 20, 40, 80, 160 ms, and the cycle may be indicated in an SIB 1. If the terminal has not received the SIB 1 during initial cell searching, the terminal may search for the SSB according to a default cycle of 20 ms.

In NR, due to misalignment of a synchronization grid and a frequency grid, a frequency offset between a 0 subcarrier of a 0 RB of the SSB and a 0 subcarrier of a lowest RB in a bandwidth part (Bandwidth Part, BWP) that overlaps the SSB is referred to as a kSSB.

The SSB in NR may be used for initial access of the terminal or may be configured to the terminal as a measurement reference signal. The former is associated with the SIB 1 and is referred to as a cell-defining SSB (cell-defining SSB), and the latter is referred to as a non cell-defining SSB (non cell-defining SSB). The SIB 1 includes necessary information for the terminal to camp on a cell, that is, the terminal can camp on the cell only when a cell-defining SSB is found.

The terminal may obtain a value of the kSSB by demodulating master information block (Master Information Block, MIB) information carried by the PBCH in the SSB. A frequency range (Frequency range, FR) 1 is used as an example. A value of the kSSB is an integer ranging from 0 to 31. When the value of the kSSB is in the range [0, 23], the SSB is the cell-defining SSB. When the value of the kSSB is in the range [24, 30], the SSB is the non cell-defining SSB. In this case, the network side device can jointly indicate a location of the cell-defining SSB by using the kSSB and a bit in a pdcch-ConfigSIB1 information field. When the value of the kSSB is 31, the terminal considers that there is no cell-defining SSB near a to-be-searched frequency.

In view of that downlink transmission accounts for a large proportion of energy consumption of uplink and downlink transmission of the network side device (for example, the base station), to reduce energy consumption of the network side device, an alternative energy-saving solution of the network side device includes manners such as increasing a common signal transmission cycle by disabling downlink transmission. After the network side device enters such an energy-saving mode, another network side device or terminal needs to assist the network side device to return to a normal operating mode from the energy-saving mode. A possible implementation is to wake up the network side device in the energy-saving mode by the terminal. Therefore, a configuration determining method of this application is proposed, so that a terminal triggers, based on a corresponding wake up signal configuration, a network side device to return to a second operating mode from a first operating mode, where energy consumption in the first operating mode is lower than energy consumption in the second operating mode.

It should be noted that the first operating mode in embodiments of this application may be understood as an energy-saving mode, and the second operating mode may be referred to as a wake up operating mode. Specifically, the second operating mode may be understood as an energy-saving mode or a normal operating mode. For example, the terminal sends a signal based on a corresponding configuration, to trigger the network side device to return to the normal operating mode from the energy-saving mode, or the terminal sends a signal based on the corresponding configuration, to trigger the network side device to return to an energy-saving mode 2 from an energy-saving mode 1, where energy consumption in the energy-saving mode 1 is lower than energy consumption in the energy-saving mode 2.

It should be understood that, in the energy-saving mode, the network side device may disable uplink and downlink transmission, may disable downlink transmission only, or may disable downlink transmission of some antennas. This can further reduce downlink transmission power. Details are not further limited herein.

A configuration determining method according to an embodiment of this application may be described in detail with reference to the accompanying drawings through some embodiments and application scenarios thereof.

As shown in FIG. 2, the configuration determining method according to an embodiment of this application includes the following steps.

Step 201: A terminal receives a first configuration from a first network side device.

Step 202: The terminal obtains a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

In embodiments of this application, the first configuration may be understood as a sending configuration of the first signal, and the first signal may be referred to as a wake up signal or another uplink trigger signal. This is not limited further herein.

Optionally, the first configuration, the second configuration and the third configuration may each be understood as a signal configuration of the first signal. In some embodiments, when there is the protocol-agreed third configuration, if configurations of the wake up signal in the first configuration and the third configuration are different parameter configurations, the second configuration may be understood as a full set of the first configuration and the third configuration. For example, if the first configuration includes A and B, and the third configuration includes C and D, the second configuration includes A, B, C, and D. If the signal configurations in the first configuration and the third configuration include some same parameter configurations, and parameter values of at least some of the same parameter configurations are different, a parameter value in the first configuration control is taken as final. For example, if the first configuration includes A, B, and C1, and the third configuration includes C2 and D, the second configuration includes A, B, C1, and D.

In some embodiments, the first network side device may be understood as a network side device associated with a cell that enters energy-saving mode or a network side device associated with a cell that is to enter the energy-saving mode, or may be understood as a network side device associated with a serving cell of the terminal.

It should be understood that the second configuration may be understood as the first configuration when there is no protocol-agreed third configuration.

In embodiments of this application, the terminal receives the first configuration from the first network side device. The terminal obtains the second configuration based on the first configuration, where the second configuration is the signal configuration for sending the first signal by the terminal, the first signal is used to trigger the second network side device to switch from the first operating mode to the second operating mode, or trigger the second network side device to maintain the current operating mode, the energy consumption of the second network side device in the first operating mode is lower than the energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration. In this way, because embodiments of this application make clear a manner for determining the signal configuration for sending the first signal by the terminal, the network side device can apply the energy-saving mode, so that the energy consumption of the network side device can be reduced.

Optionally, the second configuration includes at least one of the following signal configurations:

a preset configuration of the first signal;
a time correction and time-frequency domain resource configuration;
a sequence configuration of the first signal; and
a power-related configuration of the first signal.

In embodiments of this application, the first signal preset configuration may be understood as a first signal general configuration, for example, the first signal preset configuration includes at least one of the following:

a validity area of the first signal;
a quantity of repetitions for repeatedly sending the first signal;
a repetition coefficient for repeatedly sending the first signal;
a repetition time interval for repeatedly sending the first signal;
a repetition cycle for repeatedly sending the first signal; and
a quantity of beams of the second network side device for receiving the first signal.

Optionally, in some embodiments, the quantity of repetitions is equal to a product of the repetition coefficient and the quantity of beams. For example, if the quantity of repetitions is N, the repetition coefficient is k, and the quantity of beams is M, a relationship of the three can be expressed as $N=k*M$, where N and M are both positive integers, and k is greater than 0.

In embodiments of this application, when the terminal needs to send the first signal, the terminal may repeatedly send the first signal a plurality of times within one first signal transmission window based on the quantity of repetitions in the first configuration, to improve a probability of successful reception by the network side device associated with the cell in the energy-saving mode. Further, the quantity of repetitions for sending the first signal by the terminal may alternatively be adjusted based on the repetition coefficient. For example, if the first network side device configures or determines, based on the protocol-agreed configuration, that the quantity of repetitions in the signal configuration is 4 and that the repetition coefficient in the signal configuration is 0.5, an actual quantity of times for sending the first signal by the terminal within one first signal transmission window is 4*0.5 times, namely, 2 times.

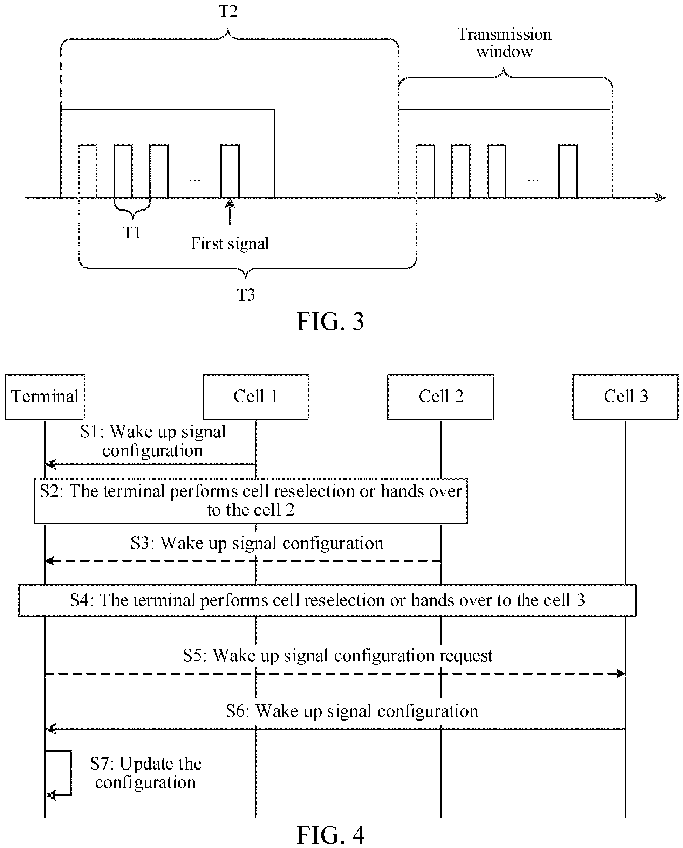

It should be noted that one or more first signal transmission windows may be set for sending of the first signal. As shown in FIG. 3, a repetition time interval for repeatedly sending the first signal is an interval T1 between time start moments of two adjacent times of repeated sending of the first signal within one first signal transmission window. The repetition cycle for repeatedly sending the first signal may be understood as an interval T2 between window start moments of the first signal of adjacent two first signal transmission windows, or may be an interval between time start moments of first sending of the first signal within adjacent two first signal transmission windows. For example, in some embodiments, if the UE determines that the second network side device sending the first signal has a plurality of operating beams, for example, the second network side device has eight beam directions, when the network side device is in the energy-saving mode, if the terminal sends the first signal to the second network side device, the terminal may be located in any one of the eight beam directions. Because the second network side device needs to perform sweeping in each beam direction during operating, the terminal needs to repeatedly send the first signal at least eight times within one first signal transmission window, to ensure that the sent first signal can be received by the second network side device.

In some embodiments, the first signal transmission window may alternatively not be set for sending of the first signal. In this case, the repetition time interval for repeatedly sending the first signal or the repetition cycle for repeatedly sending the first signal may be understood as an interval between time start moments of two adj acent times of repeated sending of the first signal.

Further, the network side device may configure the repetition coefficient k for the terminal. In this case, the quantity of times for sending the first signal by the terminal within one first signal transmission window is 8*k times.

Optionally, in some embodiments, the time correction and time-frequency domain resource configuration includes at least one of the following:

a time domain reference cell identifier;
a time domain offset value relative to time domain reference cell timing;
a time-frequency resource of the first signal; and
a frequency or a list of frequencies at which the first signal can be sent.

In embodiments of this application, because a network side device entering the energy-saving mode may completely disable downlink transmission, the UE cannot establish downlink synchronization with the network side device in the energy-saving mode when the UE sends the first signal to a base station in the energy-saving mode. Therefore, the UE needs to perform, based on timing of a time domain reference cell, time correction on a time axis for sending the first signal.

As shown in FIG. 4, it is assumed that the first signal is a WUS, a cell 1 is the serving cell of the terminal, and a cell 2 is a cell in the energy-saving mode. The UE establishes downlink synchronization based on timing (timing) of the cell 1. In this case, a time domain reference cell of the UE is the cell 1. If the cell 1 is time synchronized with the cell 2, the UE may directly send the WUS to the cell 2 based on the timing T1 of the cell 1. If the cell 1 is not time synchronized with the cell 2, the cell 1 may configure a time domain offset value (Toffset) for the UE. In this case, timing T2 based on which the terminal sends the WUS to the cell 2 is the timing T1 of the cell 1 plus the time domain offset value, that is T2=T1+Toffset.

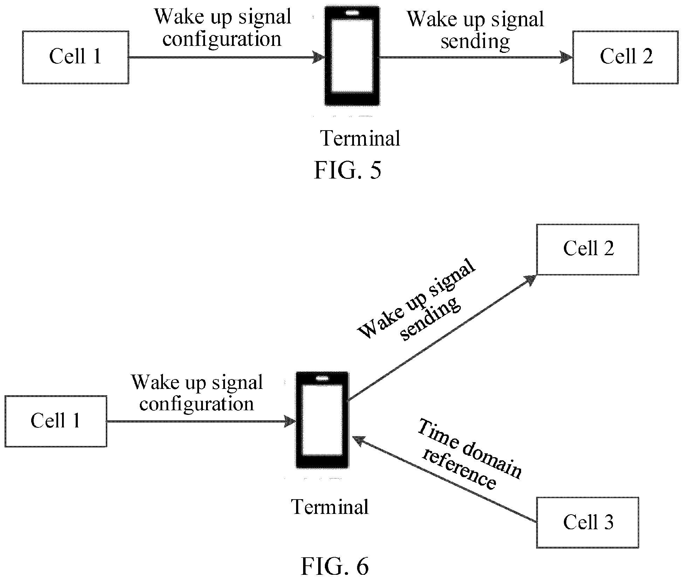

Optionally, sometimes, when a deviation of sending the WUS to the cell in the energy-saving mode based on timing of the serving cell cannot be estimated. The network side device can configure a nearby cell in a wake up mode as a time domain reference cell for the cell in the energy-saving mode, as shown in FIG. 5. In this case, because a cell 3 is closer to the cell 2, and timing of the cell 3 is more accurate as a time domain reference cell for the cell 2, the cell 3 is configured as the time domain reference cell for the UE to send the WUS.

After the terminal completes time correction, when the UE determines that the WUS needs to be sent, the WUS may be sent based on a time-frequency resource in a wake up signal configuration.

Optionally, in some embodiments, the wake up signal sequence configuration includes at least one of the following:

a random access preamble start index for the first signal;
a random access preamble end index for the first signal;
a random access preamble index for the first signal;
a sequence index of the first signal; and
a seed number for generating a sequence of the first signal.

Optionally, the random access preamble start index for the first signal or the random access preamble end index for the first signal is equal to a random access preamble index for a system message request.

Optionally, the first signal power-related configuration includes at least one of the following:

expected received power of the cell in the energy-saving mode;
reference signal sending power of a power reference cell;
a power correction value;
initial sending power of the first signal;
maximum sending power of the first signal;
a power increase value;
a sending power ramping step;
a sending power ramping cycle; and
a power reference cell index.

Optionally, the first signal includes any one of the following: an independent first signal sequence, an uplink sounding reference signal, a random access preamble, a message 1 (MSG1), a message 3 (MSG3), and a message A (MSGA).

In embodiments of this application, the message 1, the message 3, and the message A may be understood as messages sent by the terminal in a random access procedure. For example, in a four-step random access procedure, the terminal may send the message 1 and the message 3, and in a two-step random access procedure, the terminal may send the message A.

When the first signal is the message 1, the message 3, or the message A, the network side device can assume or consider that the message 1, the message 3, or the message A sent by the terminal is received, indicating that the first signal is received to trigger the network side device to return to the normal operating mode from the energy-saving mode, or to switch from the first operating mode to the second operating mode.

For example, in some embodiments, the terminal sends the message 1 to the network side device, and the message 1 carries a random access preamble for the first signal. In a case that the terminal receives the message 2 returned by the network side device, the terminal may send the message 3 as the first signal. The message 2 optionally explicitly carries a positive acknowledgement (Acknowledgement, ACK) of the random access preamble for the first signal or implicitly indicates the positive acknowledgement (Acknowledgement, ACK) of the random access preamble for the first signal by carrying an identifier of the random access preamble for the first signal. The message 3 optionally carries an identifier of the second network side device or an identifier of a group of second network side devices for receiving the first signal, and the group of second network side devices includes a plurality of second network side devices for receiving the first signal.

In some embodiments, the terminal sends the message A to the network side device, and the message A carries the random access preamble for the first signal. In this case, the message A may serve as the first signal.

Optionally, after the terminal determines the second configuration, the method further includes:

the terminal obtains a target configuration from a third network side device in a case that an area in which the terminal is located is outside a target validity area, where the target validation area is a validation area, of the first signal, included in the second configuration; and
the terminal updates the second configuration based on the target configuration.

In an embodiment, an updated second configuration is the target configuration. Alternatively, an updated second configuration includes the target configuration and the protocol-agreed third configuration, and the target configuration and the third configuration each include a part of the signal configuration.

It should be understood that the network side device may send the target configuration to the terminal by using a broadcast message, a system message, a higher layer message, or a physical layer message, for example, the network side device may send the target configuration to the terminal through radio resource control (Radio Resource Control, RRC) or by using a medium access control control element (Medium Access Control Control Element, MAC CE), or DCI.

Optionally, the target configuration may be actively sent to the terminal by the network side device, or may be obtained by the terminal through requesting. For example, in some embodiments, before the terminal obtains the target configuration from the third network side device, the method further includes:

The terminal sends a configuration request to the third network side device, where the configuration request is used to request the third network side device to send the target configuration.

In embodiments of this application, the terminal may send the configuration request through RRC, or by using the MAC CE, the uplink control information (Uplink Control Information, UCI), or the broadcast message.

It should be understood that the validity area in the signal configuration may be validated based on different validity area levels such as a tracking area (Tracking Area, TA) level, a cell list (cell list) level, a cell group (cell group) level, a cell (cell) level, or a beam level. For a better understanding, refer to FIG. 6. An example in which the first signal is the WUS, the signal configuration is the wake up signal configuration, and the validity area level is the TA level is used for description.

It is assumed that, when the validity area of the wake up signal configuration is the TA level, the configuration is validated within the same TA. When the terminal moves to a different TA, the terminal needs to re-obtain the WUS configuration from the network side device. A specific procedure is as follows.

Step S1: The UE receives an initial WUS configuration of the cell 1 belonging to a TA-1, which includes at least one of the following: a wake up signal preset configuration; a time correction and time-frequency domain resource configuration; a wake up signal sequence configuration; and a wake up signal power-related configuration.

Step S2: The UE performs cell reselection or hands over to the cell 2 belonging to the TA-1. When the UE finds, by reading an SIB or the like, that a TA code (TrackingAreaCode) of the cell 2 is the same as a TrackingAreaCode of the cell 1, the UE learns the that cell 1 and the cell 2 belong to the same TA, and considers that the initial WUS configuration is still valid, and does not update the WUS configuration.

Step S3: The cell 2 may or may not send the WUS configuration to the UE. Step S3 is an optional step. If the cell 2 sends the WUS configuration, the UE may ignore or not decode WUS configuration information.

Step S4: The UE performs cell reselection or hands over to the cell 3 belonging to a TA-2, and the UE finds, by reading the SIB or the like, that a TrackingAreaCode of the cell 3 is different from the TrackingAreaCode of the cell 1. In this case, it is considered that WUS configuration needs to be updated.

Step S5: If the cell 3 does not send the WUS configuration to the UE by using a system message or dedicated signaling, the UE may initiate a WUS Configuration request to the cell 3 to request the cell 3 to send the WUS configuration for the UE. Step S5 is an optional step.

Step S6: The UE receives the WUS configuration of the cell 3 belonging to the TA-2.

Step S7: The UE updates the WUS configuration.

For better understanding of this invention, the following are detailed through some concrete examples.

In some embodiments, the WUS sent by the terminal may be in a form of the independent wake up signal sequence, the uplink sounding reference signal, the random access preamble, the message 1, the message 3, or the message A. When the WUS is in the form of the message 1, the message 3, or the message A, it can be understood that the random access procedure is a wake up process.

Optionally, the following two cases exist when the WUS sent by the terminal is in the form of the independent wake up signal sequence.

Case 1: A WUS sequence set can be directly configured for the UE by using the SIB or RRC signaling. One WUS sequence index can be directly indicated to the UE when the network side device triggers the UE to send the WUS, and the UE learns a sequence for sending the WUS. When the UE triggers itself to send the WUS, the UE may determine, based on a preconfigured WUS sequence index, the sequence for sending the WUS.

Case 2: A WUS sequence may be generated based on a protocol-agreed calculation formula, and a seed number for generating the WUS sequence is carried when the network side device sends the WUS configuration to the UE. The UE determines, based on the protocol-agreed calculation formula and the seed number for generating the WUS sequence, the WUS sequence in a case in which the WUS is sent.

Optionally, when the WUS sent by the terminal is in a form of the sounding reference signal (Sounding Reference Signal, SRS), the following steps are included.

Step S1: The cell 1 sends the WUS configuration to the UE, to indicate the UE to send a time-frequency resource of the SRS WUS when the SRS is used as the WUS.

Step S2: When the UE determines that the WUS is to be sent, the WUS is sent based on the SRS time-frequency resource configured by the network side device in step S1.

Optionally, when the WUS sent by the terminal is in the form of the random access preamble, the following cases are included.

Case 3: Multiplex a system message request preamble (SI request preamble).

When sending the system message SIB 1, the network side device may use the SIB 1 to carry a configuration required when the UE initiates a system message request (SI request). An index number (ra-PreambleStartIndex) is included, and a range is an integer between [0, 63], to indicate that preambles (preambles) from an index number ra-PreambleStartIndex to an index number 63, namely, preambles with index numbers within [ra-PreambleStartIndex, 63], can be used for the SI request. This is equivalent to that ra-PreambleStartIndex is the random access preamble start index for the wake up signal.

When the base station in the energy-saving mode receives the random access procedure Msg1 initiated by the UE and finds that a preamble in the Msg1 is the SI request preamble, the base station considers that the WUS from the UE is received, and can switch to the wake up mode for operating.

Case 4: Allocate, to the UE, a random access preamble specifically for waking up the network side device in the energy-saving mode.

In this case, after receiving the SI request, the network side device needs to send a random access response (Random Access Response, RAR) to the UE and use the random access response to carry a system message requested by the UE. When the UE receives the RAR and the RAR includes only a random access preamble ID (Random Access Preamble ID, RAPID), the RAR is considered an acknowledgement of the network side device for the SI request (acknowledgement for SI request).

However, the behavior of sending the WUS to the network side device by the UE may only wake up the network side device, and the UE does not require the network side device to send some system messages. Consequently, multiplexing of the SI request preamble may enable the network side device to send the RAR and some unnecessary system messages, resulting in waste.

Therefore, the network side device may allocate, to the UE, the random access preamble (which may be referred to as a WUS preamble) specifically for waking up the network side device in the energy-saving mode, and use the WUS configuration to carry a start location index (WUS-PreambleStartIndex) and/or an end location index (WUS-Preamble-EndIndex) of the WUS preamble. Therefore, the UE can determine preambles can be used as WUS preambles when the WUS needs to be sent.

An implementation of the start location and/or end location index of the WUS preamble is an independent index, and another implementation is association with ra-PreambleStartIndex. For example, ra-PreambleStartIndex is used as the end location index of the WUS preamble, and then one start location index WUS-PreambleStartIndex is configured for the WUS preamble. In this way, preambles with index numbers between [WUS-PreambleStartIndex, ra-PreambleStartIndex] are used as WUS preambles, and preambles with index numbers within [ra-PreambleStartIndex, 63] are used for the SI request. This may not affect usage of previous SI request preambles. For another example, ra-PreambleStartIndex is used as the start location index of the WUS preamble, and then one location index WUS-PreambleStartIndex is configured for the WUS preamble. In this way, preambles with index numbers between [ra-PreambleStartIndex, WUS-PreambleIndex] or [WUS-PreambleIndex, 63] are used as WUS preambles, and preambles with remaining index numbers between [ra-PreambleStartIndex, 63] are used for SI request preambles. For still another example, WUS-PreambleIndex does not need to be configured, and WUS-PreambleStartIndex is ra-PreambleStartIndex, as described in Case 3.

When receiving the WUS preamble from the UE, the base station in the energy-saving mode may switch to the wake up mode for operating, without responding to the WUS preamble. When receiving the SSB/SIB from the base station entering the wake up mode, the UE may learn that the base station is woken up from the energy-saving mode, without confirmation of the RAR.

Optionally, when the WUS is in the form of the message 1, the following procedure is included.

Step S1: The network side device sends a PRACH configuration of the cell in the energy-saving mode to the UE.

Step S2: When determining to send the WUS, the UE selects, based on the physical random access channel (Physical Random Access Channel, PRACH) configuration of the cell in the energy-saving mode configured in step S1, a PRACH resource to attempt to initiate random access to the cell in the energy-saving mode.

Optionally, a calculation manner of sending power of the wake up signal is as follows.

It is assumed that the network side device configures, for the terminal, expected received power (Ptarget) for receiving the WUS by the cell in the energy-saving mode. In different scenarios, calculation manners are different.

Calculation manner 1: For a scenario with a channel reciprocity condition, if the cell in the energy-saving mode sends a measurement reference signal to the terminal, power (Pref-tx) of the measurement reference signal is agreed in a protocol, or is notified by the network side device to the UE through the WUS configuration. When the UE receives the power (Pref-tx) of the measurement reference signal, a path loss of the cell in the energy-saving mode to the UE is:

$$\text{Path loss (Ppathloss)=Pref-tx–Pref-rx}.$$

Sending power (Pue-tx) for sending the WUS by the UE is:

$$\text{Pue-tx=Ptarget+Ppathloss=Ptarget+Pref-tx-Pref-rx}.$$

Calculation manner 2: For a scenario with a channel reciprocity condition, if the cell in the energy-saving mode completely disables downlink transmission to save power, but a cell co-located or adjacent to the cell in the energy-saving mode is still in a normal operating state, the cell can become a power reference cell for sending the WUS signal by the UE, but a power correction value (Pdelta) needs to be introduced based on Calculation manner 1, that is, the sending power Pue-tx for sending the WUS by the UE is:

$$\text{Pue-tx=Ptarget+Pref-tx-Pref-rx+Pdelta}.$$

It is assumed that there is no cell that is near the cell in the energy-saving mode, that can be used as a power reference cell, and that is in the normal operating mode, a current serving cell of the UE may configure one or several of the following parameters for the UE through the WUS configuration:

    initial WUS sending power (Pue-tx-init);
    maximum WUS sending power (Pue-tx-max);
    a WUS sending power ramping step (Pramp); and
    a WUS sending power ramping cycle (Tramp).

Optionally, when the UE determines that the WUS needs to be sent, Pue-tx-init is used as the initial WUS sending power Pue-tx. The WUS sending power Pramp is ramped once per interval Tramp duration if it is found that no neighboring cell is found for camping or handover, or that the second network side device is not woken up, that is, WUS sending power after power ramping by the UE is:

$$\text{Pue-tx=Pue-tx-init+Pramp}.$$

Then, the UE repeatedly executes the above policy, and ramps up the power based on the last sending power,

that is:

$$Pue\text{-}tx = Plast + Pramp.$$

The UE no longer ramps up the power until the power Pue-tx calculated by using the above policy is greater than Pmax. Then, Pmax is always used as the power for sending the WUS by the UE.

Optionally, when the UE needs to send the WUS in sequence at different frequencies, the UE needs to determine the power for sending the WUS after switching the frequency.

For example, in some embodiments, it is assumed that the WUS configuration notifies the UE that the WUS can be sent at two frequencies, such as a frequency 1 and a frequency 2. It is assumed that the UE first sends the WUS at the frequency 1 at the initial power Pue-tx-init in the WUS configuration, and sends the WUS at P1 after several times of power ramping. When the UE switches to the frequency 2 to send the WUS, the initial WUS sending power of the UE at the frequency 2 is set to P1. Then, power ramping is performed based on P1.

For example, in some embodiments, it is assumed that the WUS configuration notifies the UE that the WUS can be sent at two frequencies, such as a frequency 1 and a frequency 2. It is assumed that the UE first sends the WUS at the frequency 1 at the initial power Pue-tx-init in the WUS configuration, and sends the WUS at P1 after several times of power ramping. When the UE switches to the frequency 2 to send the WUS, the initial WUS sending power of the UE at the frequency 2 is set to P1+Pramp.

For example, in some embodiments, it is assumed that the WUS configuration notifies the UE that the WUS can be sent at two frequencies, such as a frequency 1 and a frequency 2. It is assumed that the UE first sends the WUS at the frequency 1 at the initial power Pue-tx-init in the WUS configuration, and sends the WUS at P1 after several times of power ramping. When the UE switches to the frequency 2 to send the WUS, the initial WUS sending power of the UE at the frequency 2 is reset to Pue-tx-init. Pue-tx-init may be an initial sending power shared by all frequencies or may be initial sending power configured independently for each frequency.

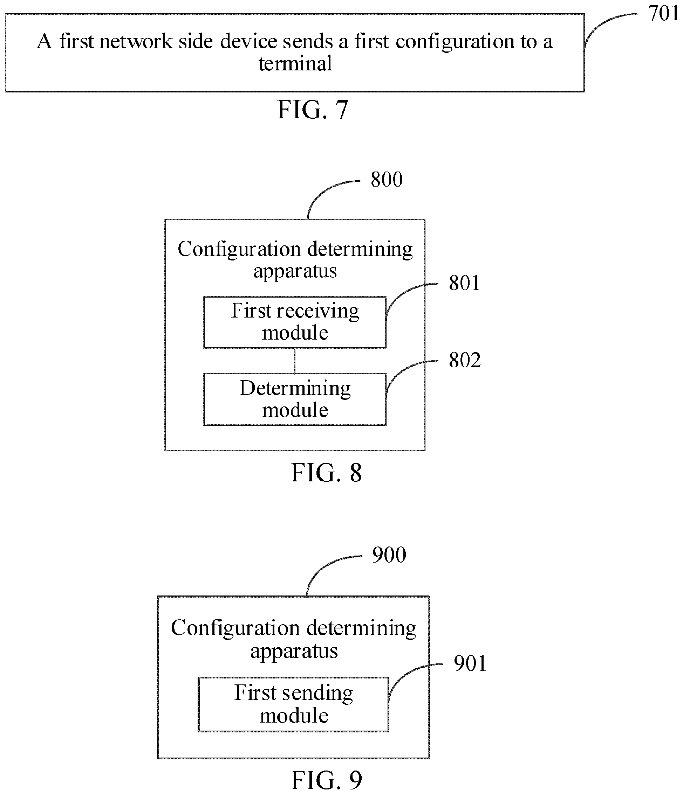

Refer to FIG. 7. An embodiment of this application further provides a configuration determining method, including:

Step 701: A first network side device sends a first configuration to a terminal, where the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

Optionally, the second configuration includes at least one of the following signal configurations:

a preset configuration of the first signal;
a time correction and time-frequency domain resource configuration;
a sequence configuration of the first signal; and
a power-related configuration of the first signal.

Optionally, the first signal preset configuration includes at least one of the following:

a validity area of the first signal;
a quantity of repetitions for repeatedly sending the first signal;
a repetition coefficient for repeatedly sending the first signal;
a repetition time interval for repeatedly sending the first signal;
a repetition cycle for repeatedly sending the first signal; and
a quantity of beams of the second network side device for receiving the first signal.

Optionally, the quantity of repetitions is equal to a product of the repetition coefficient and the quantity of beams.

Optionally, the time correction and time-frequency domain resource configuration includes at least one of the following:

a time domain reference cell identifier;

a time domain offset value relative to time domain reference cell timing;

a time-frequency resource of the first signal; and

a frequency or a list of frequencies at which the first signal can be sent.

Optionally, the sequence configuration of the first signal includes at least one of the following:

a random access preamble start index for the first signal;

a random access preamble end index for the first signal;

a random access preamble index for the first signal;

a sequence index of the first signal; and

a seed number for generating a sequence of the first signal.

Optionally, the random access preamble start index for the first signal or the random access preamble end index for the first signal is equal to a random access preamble index for a system message request.

Optionally, the first signal power-related configuration includes at least one of the following:

expected received power of the cell in the energy-saving mode;

reference signal sending power of a power reference cell;

a power correction value;

initial sending power of the first signal;

maximum sending power of the first signal;

a power increase value;

a sending power ramping step;

a sending power ramping cycle; and

a power reference cell index.

Optionally, the first signal includes any one of the following: an independent first signal sequence, an uplink sounding reference signal, a random access preamble, a message 1, a message 3, and a message A.

Because embodiments of this application make clear a manner for determining the signal configuration for sending the first signal by the terminal, the network side device can apply the energy-saving mode, so that the energy consumption of the network side device can be reduced.

The configuration determining method provided in embodiments of this application may be performed by a configuration determining apparatus. In embodiments of the application, the configuration determining apparatus provided in embodiments of this application is described by using an example in which the configuration determining apparatus performs the configuration determining method.

Refer to FIG. 8. An embodiment of this application further provides a configuration determining apparatus 800, including:

a first receiving module 801, configured to receive a first configuration from a first network side device; and

a determining module 802, configured to obtain a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

Optionally, the second configuration includes at least one of the following signal configurations:

a preset configuration of the first signal;

a time correction and time-frequency domain resource configuration;

a sequence configuration of the first signal; and

a power-related configuration of the first signal.

Optionally, the first signal preset configuration includes at least one of the following:

a validity area of the first signal;
a quantity of repetitions for repeatedly sending the first signal;
a repetition coefficient for repeatedly sending the first signal;
a repetition time interval for repeatedly sending the first signal;
a repetition cycle for repeatedly sending the first signal; and
a quantity of beams of the second network side device for receiving the first signal.

Optionally, the quantity of repetitions is equal to a product of the repetition coefficient and the quantity of beams.
Optionally, the time correction and time-frequency domain resource configuration includes at least one of the following:

a time domain reference cell identifier;
a time domain offset value relative to time domain reference cell timing;
a time-frequency resource of the first signal; and
a frequency or a list of frequencies at which the first signal can be sent.

Optionally, the sequence configuration of the first signal includes at least one of the following:

a random access preamble start index for the first signal;
a random access preamble end index for the first signal;
a random access preamble index for the first signal;
a sequence index of the first signal; and
a seed number for generating a sequence of the first signal.

Optionally, the random access preamble start index for the first signal or the random access preamble end index for the first signal is equal to a random access preamble index for a system message request.
Optionally, the first signal power-related configuration includes at least one of the following:

expected received power of the cell in the energy-saving mode;
reference signal sending power of a power reference cell;
a power correction value;
initial sending power of the first signal;
maximum sending power of the first signal;
a power increase value;
a sending power ramping step;
a sending power ramping cycle; and
a power reference cell index.

Optionally, the first signal includes any one of the following: an independent first signal sequence, an uplink sounding reference signal, a random access preamble, a message 1, a message 3, and a message A.
Optionally, the configuration determining apparatus 800 further includes an updating module.
The first receiving module 801 is further configured to: obtain a target configuration from a third network side device in a case that an area in which the terminal is located is outside a target validity area, where the target validation area is a validity area, of the first signal, included in the second configuration.
The updating module is configured to update the second configuration based on the target configuration.
Optionally, the configuration determining apparatus 800 further includes:
a second sending module, configured to send a configuration request to the third network side device, where the configuration request is used to request the third network side device to send the target configuration.
Optionally, the configuration determining apparatus 800 further includes:
a second sending module, configured to send the first signal based on the second configuration.
Refer to FIG. 9. An embodiment of this application further provides a configuration determining apparatus 900, including:
a first sending module 901, configured to send a first configuration to a terminal, where the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

Optionally, the second configuration includes at least one of the following signal configurations:

a preset configuration of the first signal;
a time correction and time-frequency domain resource configuration;
a sequence configuration of the first signal; and
a power-related configuration of the first signal.

Optionally, the first signal preset configuration includes at least one of the following:

a validity area of the first signal;
a quantity of repetitions for repeatedly sending the first signal;
a repetition coefficient for repeatedly sending the first signal;
a repetition time interval for repeatedly sending the first signal;
a repetition cycle for repeatedly sending the first signal; and
a quantity of beams of the second network side device for receiving the first signal.

Optionally, the quantity of repetitions is equal to a product of the repetition coefficient and the quantity of beams.

Optionally, the time correction and time-frequency domain resource configuration includes at least one of the following:

a time domain reference cell identifier;
a time domain offset value relative to time domain reference cell timing;
a time-frequency resource of the first signal; and
a frequency or a list of frequencies at which the first signal can be sent.

Optionally, the sequence configuration of the first signal includes at least one of the following:

a random access preamble start index for the first signal;
a random access preamble end index for the first signal;
a random access preamble index for the first signal;
a sequence index of the first signal; and
a seed number for generating a sequence of the first signal.

Optionally, the random access preamble start index for the first signal or the random access preamble end index for the first signal is equal to a random access preamble index for a system message request.

Optionally, the first signal power-related configuration includes at least one of the following:

expected received power of the cell in the energy-saving mode;
reference signal sending power of a power reference cell;
a power correction value;
initial sending power of the first signal;
maximum sending power of the first signal;
a power increase value;
a sending power ramping step;
a sending power ramping cycle; and
a power reference cell index.

Optionally, the first signal includes any one of the following: an independent first signal sequence, an uplink sounding reference signal, a random access preamble, a message 1, a message 3, and a message A.

The configuration determining apparatus in embodiments of this application may be an electronic device, for example, an electronic device having an operating system, or may be a component in an electronic device, for example, an integrated circuit or a chip. The electronic device may be a terminal or a device other than the terminal. For example, the terminal may include, but is not limited to, a type of the terminal 11 listed above, and the another device may be a server or a network attached storage (Network Attached Storage, NAS). This is not limited in embodiments of this application.

The configuration determining apparatus according to embodiments of this application can implement all processes implemented in the method embodiments shown in FIG. 2 to FIG. 7, and the same technical effect can be achieved. To avoid repetition, details are not described herein again.

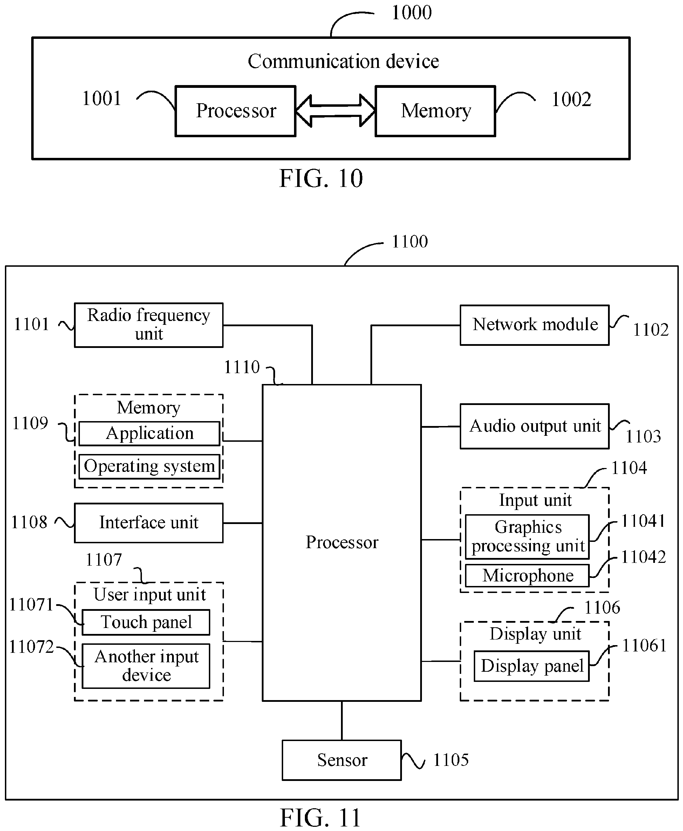

Optionally, as shown in FIG. 10, an embodiment of this application further provide a communication device 1000, including a processor 1001 and a memory 1002. The memory 1002 stores programs or instructions that can be run on the processor 1001. When the programs or instructions are executed by the processor 1001, the steps of the embodiments of the configuration determining method are implemented, and the same technical effect can be achieved. To avoid repetition, details are not described herein again.

An embodiment of this application further provides a terminal, including a processor and a communication interface. The communication interface is configured to receive a first configuration from a first network side device. The processor is configured to obtain a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration. The embodiment of the terminal corresponds to the method embodiment of the terminal side, and implementation processes and implementations of the method embodiment can be applied to the embodiment of the terminal, and the same technical effect can be achieved. Specifically, FIG. 11 is a schematic diagram of a hardware structure of a terminal according to an embodiment of this application.

A terminal 1100 includes, but is not limited to: at least some components of a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

A person skilled in the art can understand that the terminal 1100 may further include a power supply (for example, a battery) for supplying power to each component. The power supply may be logically connected to the processor 1110 by using a power management system, thereby implementing functions such as charging, discharging, and power consumption management by using the power management system. The structure of the terminal shown in FIG. 11 does not constitute a limitation on the terminal, and the terminal may include more or fewer components than those shown in the figure, or combine some components, or have different component arrangements. Details are not described herein again.

It should be understood that in embodiments of this application, the input unit 1104 may include a graphics processing unit (Graphics Processing Unit, GPU) 11041 and a microphone 11042. The graphics processing unit 11041 performs processing on image data of a static picture or a video that is obtained by an image capture device (for example, a camera) in a video capture mode or an image capture mode. The display unit 1106 may include a display panel 11061. The display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include, but not limited to, a physical keyboard, a functional button (for example, a volume control button or a switch button), a track ball, a mouse, and a joystick. Details are not described herein.

In embodiments of this application, the radio frequency unit 1101 receives downlink data from a network side device, and then transmits the downlink data to the processor 1110 for processing. In addition, the radio frequency unit 1101 may transmit uplink data to the network side device. Generally, the radio frequency unit 1101 includes, but is not limited to, an antenna, an amplifier, a transceiver, a coupler, a low noise amplifier, a duplexer, and the like.

The memory 1109 is configured to store a software program and various data. The memory 1109 may mainly include a first storage area for storing programs and instructions and a second storage area for storing data. The first storage area may store an operating system, an application required by at least one function (for example, a sound playing function and an image display function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 1109 in embodiments of this application includes, but is not limited to these and any other suitable types of memories.

The processor 1110 may include one or more processing units. Optionally, the processor 1110 integrates an application processor and a modem processor. The application processor mainly processes an operating system, a user interface, an application, and the like, and the modem processor mainly processes a wireless communication signal, for example, a baseband processor. It may be understood that the foregoing modem processor may not be integrated into the processor 1110.

The radio frequency unit 1101 is configured to receive a first configuration from a first network side device.

The processor 1110 is configured to obtain a second configuration based on the first configuration, where the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode.

The second configuration is the first configuration. Alternatively, the second configuration includes the first configuration and a protocol-agreed third configuration, and the first configuration and the third configuration each include a part of the signal configuration.

In embodiments of this application, the first configuration is received from the first network side device. The second configuration is obtained based on the first configuration. The second configuration is the signal configuration for sending the first signal by the terminal, the first signal is used to trigger the second network side device to switch from the first operating mode to the second operating mode, or trigger the second network side device to maintain the current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration. In this way, because embodiments of this application make clear a manner for determining the signal configuration for sending the first signal by the terminal, the network side device can apply the energy-saving mode, so that the energy consumption of the network side device can be reduced.

Optionally, the second configuration includes at least one of the following signal configurations:

a preset configuration of the first signal;
a time correction and time-frequency domain resource configuration;
a sequence configuration of the first signal; and
a power-related configuration of the first signal.

Optionally, the first signal preset configuration includes at least one of the following:

a validity area of the first signal;
a quantity of repetitions for repeatedly sending the first signal;
a repetition coefficient for repeatedly sending the first signal;
a repetition time interval for repeatedly sending the first signal;
a repetition cycle for repeatedly sending the first signal; and
a quantity of beams of the second network side device for receiving the first signal.

Optionally, the quantity of repetitions is equal to a product of the repetition coefficient and the quantity of beams.

Optionally, the time correction and time-frequency domain resource configuration includes at least one of the following:

a time domain reference cell identifier;
a time domain offset value relative to time domain reference cell timing;
a time-frequency resource of the first signal; and
a frequency or a list of frequencies at which the first signal can be sent.

Optionally, the sequence configuration of the first signal includes at least one of the following:

a random access preamble start index for the first signal;
a random access preamble end index for the first signal;
a random access preamble index for the first signal;

a sequence index of the first signal; and

a seed number for generating a sequence of the first signal.

Optionally, the random access preamble start index for the first signal or the random access preamble end index for the first signal is equal to a random access preamble index for a system message request.

Optionally, the first signal power-related configuration includes at least one of the following:

expected received power of the cell in the energy-saving mode;

reference signal sending power of a power reference cell;

a power correction value;

initial sending power of the first signal;

maximum sending power of the first signal;

a power increase value;

a sending power ramping step;

a sending power ramping cycle; and

a power reference cell index.

Optionally, the first signal includes any one of the following: an independent first signal sequence, an uplink sounding reference signal, a random access preamble, a message 1, a message 3, and a message A.

Optionally, the radio frequency unit 1101 is further configured to: obtain a target configuration from a third network side device in a case that an area in which the terminal is located is outside a target validity area, where the target validation area is a validity area, of the first signal, included in the second configuration.

The processor 1110 is further configured to update the second configuration based on the target configuration.

Optionally, the radio frequency unit 1101 is further configured to send a configuration request to the third network side device, where the configuration request is used to request the third network side device to send the target configuration.

An embodiment of this application further provides a network side device, including a processor and a communication interface. The communication interface is configured to send a first configuration to a terminal, where the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode. The second configuration is the first configuration. Alternatively, the second configuration includes the first configuration and a protocol-agreed third configuration, and the first configuration and the third configuration each include a part of the signal configuration. The embodiment of the network side device corresponds to the method embodiment of the network side device, and implementation processes and implementations of the method embodiment can be applied to the embodiment of the network side device, and the same technical effect can be achieved.

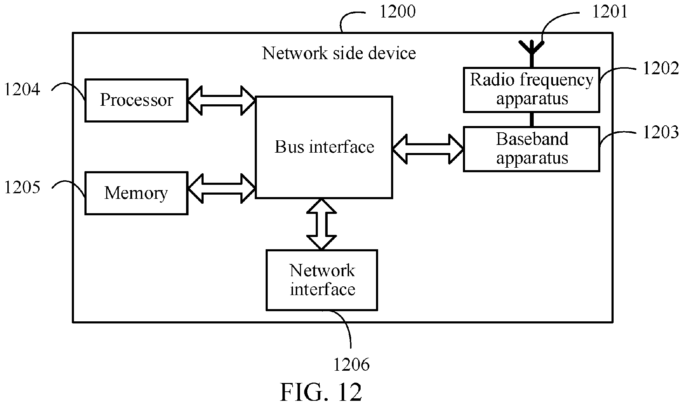

Specifically, an embodiment of this application further provides a network side device. As shown in FIG. 12, a network side device 1200 includes: an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information through the antenna 1201 and sends the received information to the baseband apparatus 1203 for processing. In a downlink direction, the baseband apparatus 1203 processes to-be-sent information and sends the information to the radio frequency apparatus 1202, and the radio frequency apparatus 1202 processes the received information and sends the information through the antenna 1201.

The method performed by the network side device in the foregoing embodiments may be implemented in the baseband apparatus 1203, and the baseband apparatus 1203 includes a baseband processor.

The baseband means 1203 may include, for example, at least one baseband board. A plurality of chips are provided on the baseband board, as shown in FIG. 12. One of the chips, for example, is a baseband processor, and is connected with the memory 1205 through a bus interface, to invoke the programs in the memory 1205, so as to perform the operations performed by the network side device shown in the foregoing method embodiments.

The network side device may further include a network interface 1206, and the interface, for example, is a common public radio interface (Common Public Radio Interface, CPRI).

Specifically, the network side device 1200 in embodiments of this application further includes: instructions or programs that are stored in the memory 1205 and that can be executed on the processor 1204. The processor 1204 invokes the instructions or programs in the memory 1205 to perform the method performed by the modules shown in FIG. 9, and the same technical effect can be achieved. To avoid repetition, details are not described herein again.

An embodiment of this application further provides a readable storage medium. The readable storage medium stores programs and instructions. When the programs and instructions are executed by a processor, the processes of embodiments of the configuration determining method is implemented, and the same technical effect can be achieved. To avoid repetition, details are not described herein again.

The processor is the processor in the terminal described in the foregoing embodiments. The readable storage medium includes a computer-readable storage medium, for example, a computer read-only memory ROM, a random access memory RAM, a magnetic disk, or an optical disk.

An embodiment of this application further provides chip. The chip includes a processor and a communication interface. The communication interface is coupled with the processor, and the processor is used to run programs or instructions, to implement the processes of embodiments of the configuration determining method, and the same technical effect can be achieved. To avoid repetition, details are not described herein again.

It should be understood that the chip in embodiments of this application may also be referred to as a system level chip, a system chip, a chip system, system-on-chip, or the like.

An embodiment of this application further provides a computer program/program product. The computer program/program product is stored in a storage medium. The computer program/program product is executed by at least one processor, to implement the processes of embodiments of the configuration determining method, and the same technical effect can be achieved. To avoid repetition, details are not described herein again.

An embodiment of this application further provides a system for performing a configuration determining method, including: a terminal and a network side device. The terminal may be configured to perform the steps of the configuration determining method described above, and the network side device may be configured to perform the steps of the configuration determining method described above.

An embodiment of this application further provides a communication device, configured to perform the steps of the configuration determining method described above, and the same technical effect can be achieved. To avoid repetition, details are not described herein again.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in embodiments of this application is not limited to performing functions in the order shown or discussed, but may also include performing functions in a substantially simultaneous manner or in reverse order depending on the functions involved, for example, the described method may be performed in a different order than described, and various steps may be added, omitted, or combined. In addition, features described with reference to specific examples can be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application essentially, or the part contributing to the related technology, may be presented in the form of a computer software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in embodiments of this application.

Embodiments of this application are described above with reference to the accompanying drawings. This application is not limited to the specific embodiments described above, and the specific embodiments described above are merely exemplary and not limitative. Persons of ordinary skill in the art may make various variations under the teaching of this application without departing from the spirit of this application and the protection scope of the claims, and such variations shall all fall within the protection scope of this application.

**Claims**

1. A configuration determining method, comprising:

   receiving, by a terminal, a first configuration from a first network side device; and
   obtaining, by the terminal, a second configuration based on the first configuration, wherein the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode, wherein

the second configuration is the first configuration; or the second configuration comprises the first configuration and a protocol-agreed third configuration, and the first configuration and the third configuration each comprise a part of the signal configuration.

2. The method according to claim 1, wherein the second configuration comprises at least one of the following signal configurations:

   a preset configuration of the first signal;
   a time correction and time-frequency domain resource configuration;
   a sequence configuration of the first signal; and
   a power-related configuration of the first signal.

3. The method according to claim 2, wherein the first signal preset configuration comprises at least one of the following:

   a validity area of the first signal;
   a quantity of repetitions for repeatedly sending the first signal;
   a repetition coefficient for repeatedly sending the first signal;
   a repetition time interval for repeatedly sending the first signal;
   a repetition cycle for repeatedly sending the first signal; and
   a quantity of beams of the second network side device for receiving the first signal.

4. The method according to claim 3, wherein the quantity of repetitions is equal to a product of the repetition coefficient and the quantity of beams.

5. The method according to claim 2, wherein the time correction and time-frequency domain resource configuration comprises at least one of the following:

   a time domain reference cell identifier;
   a time domain offset value relative to time domain reference cell timing;
   a time-frequency resource of the first signal; and
   a frequency or a list of frequencies at which the first signal can be sent.

6. The method according to claim 2, wherein the sequence configuration of the first signal comprises at least one of the following:

   a random access preamble start index for the first signal;
   a random access preamble end index for the first signal;
   a random access preamble index for the first signal;
   a sequence index of the first signal; and
   a seed number for generating a sequence of the first signal.

7. The method according to claim 6, wherein the random access preamble start index for the first signal or the random access preamble end index for the first signal is equal to a random access preamble index for a system message request.

8. The method according to claim 2, wherein the first signal power-related configuration comprises at least one of the following:

   expected received power of a cell in an energy-saving mode;
   reference signal sending power of a power reference cell;
   a power correction value;
   initial sending power of the first signal;
   maximum sending power of the first signal;
   a power increase value;
   a sending power ramping step;
   a sending power ramping cycle; and

a power reference cell index.

9. The method according to any one of claims 1 to 8, wherein the first signal comprises any one of the following: an independent first signal sequence, an uplink sounding reference signal, a random access preamble, a message 1, a message 3, and a message A.

10. The method according to any one of claims 1 to 8, wherein after the terminal determines the second configuration, the method further comprises:

obtaining, by the terminal, a target configuration from a third network side device in a case that an area in which the terminal is located is outside a target validity area, wherein the target validity area is a validity area, of the first signal, comprised in the second configuration; and
updating, by the terminal, the second configuration based on the target configuration.

11. The method according to claim 10, wherein before the obtaining, by the terminal, a target configuration from a third network side device, the method further comprises:
sending, by the terminal, a configuration request to the third network side device, wherein the configuration request is used to request the third network side device to send the target configuration.

12. The method according to any one of claims 1 to 11, wherein the method further comprises:
sending, by the terminal, the first signal based on the second configuration.

13. A configuration determining method, comprising:

sending, by a first network side device, a first configuration to a terminal, wherein the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode, wherein
the second configuration is the first configuration; or the second configuration comprises the first configuration and a protocol-agreed third configuration, and the first configuration and the third configuration each comprise a part of the signal configuration.

14. The method according to claim 13, wherein the second configuration comprises at least one of the following signal configurations:

a preset configuration of the first signal;
a time correction and time-frequency domain resource configuration;
a sequence configuration of the first signal; and
a power-related configuration of the first signal.

15. The method according to claim 14, wherein the first signal preset configuration comprises at least one of the following:

a validity area of the first signal;
a quantity of repetitions for repeatedly sending the first signal;
a repetition coefficient for repeatedly sending the first signal;
a repetition time interval for repeatedly sending the first signal;
a repetition cycle for repeatedly sending the first signal; and
a quantity of beams of the second network side device for receiving the first signal.

16. The method according to claim 15, wherein the quantity of repetitions is equal to a product of the repetition coefficient and the quantity of beams.

17. The method according to claim 14, wherein the time correction and time-frequency domain resource configuration comprises at least one of the following:

a time domain reference cell identifier;
a time domain offset value relative to time domain reference cell timing;
a time-frequency resource of the first signal; and
a frequency or a list of frequencies at which the first signal can be sent.

18. The method according to claim 14, wherein the first signal sequence configuration comprises at least one of the following:

a random access preamble start index for the first signal;
a random access preamble end index for the first signal;
a random access preamble index for the first signal;
a sequence index of the first signal; and
a seed number for generating a sequence of the first signal.

19. The method according to claim 18, wherein the random access preamble start index for the first signal or the random access preamble end index for the first signal is equal to a random access preamble index for a system message request.

20. The method according to claim 14, wherein the first signal power-related configuration comprises at least one of the following:

expected received power of a cell in an energy-saving mode;
reference signal sending power of a power reference cell;
a power correction value;
initial sending power of the first signal;
maximum sending power of the first signal;
a power increase value;
a sending power ramping step;
a sending power ramping cycle; and
a power reference cell index.

21. The method according to any one of claims 13 to 20, wherein the first signal comprises any one of the following: an independent first signal sequence, an uplink sounding reference signal, a random access preamble, a message 1, a message 3, and a message A.

22. A configuration determining apparatus, comprising:

a first receiving module, configured to receive a first configuration from a first network side device; and
a determining module, configured to obtain a second configuration based on the first configuration, wherein the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode, wherein
the second configuration is the first configuration; or the second configuration comprises the first configuration and a protocol-agreed third configuration, and the first configuration and the third configuration each comprise a part of the signal configuration.

23. A configuration determining apparatus, comprising:

a first sending module, configured to send a first configuration to a terminal, wherein the first configuration is used for the terminal to obtain a second configuration based on the first configuration, the second configuration is a signal configuration for sending a first signal by the terminal, the first signal is used to trigger a second network side device to switch from a first operating mode to a second operating mode, or trigger the second network side device to maintain a current operating mode, energy consumption of the second network side device in the first operating mode is lower than energy consumption of the second network side device in the second operating mode, and the current operating mode is either the first operating mode or the second operating mode, wherein

the second configuration is the first configuration; or the second configuration comprises the first configuration and a protocol-agreed third configuration, and the first configuration and the third configuration each comprise a part of the signal configuration.

24. A terminal, comprising a memory and a processor, wherein the memory stores a program or an instruction that is capable of being run on the processor, and when the program or instruction is executed by the processor, the steps of the configuration determining method according to any one of claims 1 to 12 are implemented.

25. A network side device, comprising a memory and a processor, wherein the memory stores a program or an instruction that is capable of being run on the processor, and when the program or instruction is executed by the processor, the steps of the configuration determining method according to any one of claims 13 to 21 are implemented.

26. A readable storage medium, wherein the readable storage medium stores a program or an instruction, and when the program or instruction is executed by a processor, the steps of the configuration determining method according to any one of claims 1 to 21 are implemented.

12

Network side device

11

11

Terminal

Terminal

FIG. 1

| 201 |
| A terminal receives a first configuration from a first network side device |

| 202 |
| The terminal obtains a second configuration based on the first configuration |

FIG. 2

FIG. 3

FIG. 4

Terminal

FIG. 5

Terminal

FIG. 6

701

A first network side device sends a first configuration to a terminal

FIG. 7

800

Configuration determining apparatus

801

First receiving module

802

Determining module

FIG. 8

900

Configuration determining apparatus

901

First sending module

FIG. 9

1000

Communication device

1001  Processor  ⟷  Memory  1002

FIG. 10

1100

1101  Radio frequency unit

Network module  1102

1110

Memory
1109  Application
Operating system

Audio output unit  1103

1104
Input unit
Graphics processing unit  11041
Microphone  11042

1108  Interface unit

Processor

1107
User input unit
11071  Touch panel
11072  Another input device

1106
Display unit
Display panel  11061

Sensor  1105

FIG. 11

1200      1201

Network side device

1204   Processor

Bus interface

1205   Memory

Network interface

1206

Radio frequency apparatus   1202

Baseband apparatus   1203

FIG. 12

**EP 4 468 790 A1**

<table>
<tr><td colspan="2" align="center">INTERNATIONAL SEARCH REPORT</td><td colspan="2">International application No.<br><br>**PCT/CN2023/072161**</td></tr>
<tr><td colspan="4">**A. CLASSIFICATION OF SUBJECT MATTER**<br><br>H04W52/02(2009.01)i<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br><br>IPC: H04W; H04Q; H04L</td></tr>
<tr><td colspan="4">Documentation searched other than minimum documentation to the extent that such documents are included in the fields searched<br><br> </td></tr>
<tr><td colspan="4">Electronic data base consulted during the international search (name of data base and, where practicable, search terms used)<br><br>CNTXT; WPABS; WPABSC; ENTXT; ENTXTC; 3GPP; CJFD; IEEE; CNKI; WOTXT: 配置, 工作模式, 触发, 唤醒, 睡眠, 资源, 序列, 时域, 频域, 偏移, 随机接入前导, 索引, 功率, configuration, operation Mode, trigger, wake up, sleep, WUS, resource, sequence, time domain, frequency domain, offset, random access preamble, index, power</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>X</td><td colspan="2">CN 110913482 A (TELECOMMUNICATIONS TECHNOLOGY RESEARCH INSTITUTE CO., LTD.) 24 March 2020 (2020-03-24)<br>description paragraphs [0178] to [0299]</td><td>1-26</td></tr>
<tr><td>X</td><td colspan="2">WO 2020034283 A1 (ZTE CORP.) 20 February 2020 (2020-02-20)<br>description paragraphs [0018] to [0069]</td><td>1-26</td></tr>
<tr><td>A</td><td colspan="2">CN 110896558 A (TELECOMMUNICATIONS TECHNOLOGY RESEARCH INSTITUTE CO., LTD.) 20 March 2020 (2020-03-20)<br>entire document</td><td>1-26</td></tr>
<tr><td>A</td><td colspan="2">US 2020205079 A1 (CHINA MOBILE COMMUNICATION CO., LTD RESEARCH INSTITUTE) 25 June 2020 (2020-06-25)<br>entire document</td><td>1-26</td></tr>
<tr><td>A</td><td colspan="2">WO 2020029243 A1 (ZTE CORP.) 13 February 2020 (2020-02-13)<br>entire document</td><td>1-26</td></tr>
<tr><td>A</td><td colspan="2">WO 2021066419 A1 (LG ELECTRONICS INC.) 08 April 2021 (2021-04-08)<br>entire document</td><td>1-26</td></tr>
<tr><td colspan="2">☐ Further documents are listed in the continuation of Box C.</td><td colspan="2">☑ See patent family annex.</td></tr>
<tr><td colspan="2">*     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed</td><td colspan="2">"T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family</td></tr>
<tr><td colspan="2">Date of the actual completion of the international search<br><br>**23 March 2023**</td><td colspan="2">Date of mailing of the international search report<br><br>**28 March 2023**</td></tr>
<tr><td colspan="2">Name and mailing address of the ISA/CN<br><br>**China National Intellectual Property Administration (ISA/CN)**<br>**China No. 6, Xitucheng Road, Jimenqiao, Haidian District, Beijing 100088**</td><td colspan="2">Authorized officer<br><br><br><br> </td></tr>
<tr><td colspan="2">Facsimile No. **(86-10)62019451**</td><td colspan="2">Telephone No.</td></tr>
</table>

Form PCT/ISA/210 (second sheet) (July 2022)

**INTERNATIONAL SEARCH REPORT**
Information on patent family members

International application No.

**PCT/CN2023/072161**

| Patent document cited in search report | | | Publication date (day/month/year) | Patent family member(s) | | | Publication date (day/month/year) |
|---|---|---|---|---|---|---|---|
| CN | 110913482 | A | 24 March 2020 | WO | 2020057545 | A1 | 26 March 2020 |
| | | | | EP | 3855828 | A1 | 28 July 2021 |
| | | | | EP | 3855828 | A4 | 24 November 2021 |
| | | | | KR | 20210058930 | A | 24 May 2021 |
| | | | | KR | 102465112 | B1 | 09 November 2022 |
| | | | | US | 2022015034 | A1 | 13 January 2022 |
| WO | 2020034283 | A1 | 20 February 2020 | EP | 3847852 | A1 | 14 July 2021 |
| | | | | EP | 3847852 | A4 | 27 October 2021 |
| CN | 110896558 | A | 20 March 2020 | None | | | |
| US | 2020205079 | A1 | 25 June 2020 | EP | 3672313 | A1 | 24 June 2020 |
| | | | | EP | 3672313 | A4 | 28 April 2021 |
| | | | | KR | 20200038994 | A | 14 April 2020 |
| | | | | KR | 102345874 | B1 | 31 December 2021 |
| | | | | WO | 2019033916 | A1 | 21 February 2019 |
| WO | 2020029243 | A1 | 13 February 2020 | None | | | |
| WO | 2021066419 | A1 | 08 April 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210062491